(19) Europäisches Patentamt
European Patent Office
Office européen des brevets

(11) **EP 4 220 675 A1**

(12) # EUROPEAN PATENT APPLICATION
published in accordance with Art. 153(4) EPC

(43) Date of publication:
**02.08.2023 Bulletin 2023/31**

(21) Application number: **21872622.2**

(22) Date of filing: **27.09.2021**

(51) International Patent Classification (IPC):
**H01G 9/035** (2006.01)  **H01G 9/10** (2006.01)
**H01G 9/145** (2006.01)

(52) Cooperative Patent Classification (CPC):
**H01G 9/035; H01G 9/10; H01G 9/145**

(86) International application number:
**PCT/JP2021/035473**

(87) International publication number:
**WO 2022/065497 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020 JP 2020162426**

(71) Applicant: **Nippon Chemi-Con Corporation
Tokyo 141-8605 (JP)**

(72) Inventors:
• **SATO, Kenta**
  **Tokyo 141-8605 (JP)**
• **NAKAMURA, Ippei**
  **Tokyo 141-8605 (JP)**
• **SAKAKURA, Masao**
  **Tokyo 141-8605 (JP)**

(74) Representative: **Baldus, Oliver
Splanemann
Rumfordstrasse 7
80469 München (DE)**

(54) **ELECTROLYTE SOLUTION FOR ELECTROLYTIC CAPACITORS, AND ELECTROLYTIC CAPACITOR**

(57) Disclosed is an electrolytic capacitor which has a long life and which is provided with an electrolyte which is difficult to steam and disperse in butyl rubber used as a sealing member, and which suppresses evaporation volatilization of the electrolyte. An electrolytic capacitor is provided with a capacitor element having an anode foil, a cathode foil and a separator, an electrolytic solution containing a solvent and a solute, a case containing the capacitor element, and butyl rubber sealing the case, wherein the distance between the Hansen solubility parameter of the solvent and the Hansen solubility parameter of the butyl rubber is not less than 26.5, and the boiling point of the solvent is not less than 160 degrees celsius.

EP 4 220 675 A1

**Description**

[Technical Field]

The present invention relates to an electrolytic solution for an electrolytic capacitor and an electrolytic capacitor.

BACKGROUND ART

An electrolytic capacitor contains a capacitor element in which an electrolytic solution is adhered in a bottomed case, and an opening of the case is sealed with a sealing member such as butyl rubber. The electrolytic solution has a chemical conversion property for repairing deteriorated portions such as deterioration and damage of the dielectric film formed on the anode foil, and affects the leakage current and the life characteristics of the electrolytic capacitor. However, as time passes, the electrolytic solution passes through the sealing member and escapes to the outside of the electrolytic capacitor, wherein causes evaporation volatilization. Therefore, the capacitance of the electrolytic capacitor decreases with time, and the tangent of the loss angle (tan $\delta$) increases with time, finally reaching the end of life.

Patent Documents 1 and 2 disclose a technique in which a polymer compound is added to an electrolytic solution to increase the viscosity and suppress the evaporation of the electrolytic solution. However, when the amount of the polymer compound added is increased, the electric characteristics of the capacitor may be deteriorated, and there is a limit in suppressing the evaporation volatilization by adding the polymer compound.

Patent Document 3 discloses that the Hildebrand solubility parameter (SP) is used to specify the difference between the SP of an organic solvent and that of a sealing member, thereby suppressing the evaporation volatilization. SP is a physical property value defined by the square root of cohesive energy density, and is a numerical value indicating the dissolution behavior of the solvent. However, the predictive accuracy of the dissolution behavior is not sufficient, and it has been difficult to search for an optimum solvent in an electrolytic solution for an electrolytic capacitor using SP.

[Prior art documents]

Patent Documents

[0005]

　　　Patent Document 1 : Japanese Patent Application Laid-Open No. 4 (1994) - 73922
　　　Patent Document 2 : International Publication No. WO2011 / 099261
　　　Patent Document 3 : JP-A No. 214637 / 2004

[Outline of the Invention]

[Problems to be solved by the invention]

The present invention has been proposed in order to solve the above-mentioned problems, and an object of the present invention is to provide an electrolyte which is difficult to steam and disperse to butyl rubber used as a sealing member. Also provided is an electrolytic capacitor which has a long life and evaporation volatilization of an electrolytic solution. Further, it is possible to easily find out a solvent suitable for the electrolytic solution for the electrolytic capacitor from among various solvents.

[Means for solving the problem]

The present inventors paid attention to Hansen solubility parameter (HSP) and examined the affinity between butyl rubber used as a sealing member and a solvent contained in an electrolytic solution. An HSP is represented by a point in three dimensional space consisting of a dispersive component ($\delta$D), a polar component ($\delta$P), and a hydrogen-bonded component ($\delta$H). The affinity between two substances can be evaluated by the distance between two HSPs (HSP distance), and when the HSP distance is large, it can be assumed that the affinity is small (difficult to become familiar). The HSP distance ($\Delta\delta$) is calculated by the following equation.

[Formula 1]

$$\Delta\delta = [(\delta_{D1} - \delta_{D2})^2 + (\delta_{P1} - \delta_{P2})^2 + (\delta_{H1} - \delta_{H2})^2]^{1/2}$$

As a result, it was found that when the distance between the butyl rubber and the HSP of the electrolyte solution is 26.2 or more, the evaporation of the electrolyte solution is greatly suppressed, and a long-life electrolytic capacitor can be produced.

The electrolyte for an electrolytic capacitor of the present invention contains a solvent having a boiling point of 160 degrees celsius. or higher, and the distance between the Hansen solubility parameter of the solvent and the Hansen solubility parameter of the butyl rubber used as the sealing member is 26.2 or higher.

The solvent of the electrolytic solution for an electrolytic capacitor may be one or more selected from glycerol carbonate, methanamide and glycerin.

The electrolytic capacitor is provided with a capacitor element having an anode foil having a dielectric film on the surface, a cathode foil, and a separator interposed between the anode foil and the cathode foil, an electrolytic solution contained in the capacitor element and containing a solvent and a solute, a case containing the capacitor element, and butyl rubber sealing the case, wherein the distance between the Hansen solubility parameter of the solvent and the Hansen solubility parameter of the butyl rubber is not less than 26.2, and the boiling point of the solvent is not less than 160 degrees celsius.

The electrolytic capacitor is provided with a capacitor element having an anode foil having a dielectric film on the surface, a cathode foil, and a separator interposed between the anode foil and the cathode foil, a solid electrolyte layer formed in the capacitor element and containing a conductive polymer, a solvent contained in the capacitor element, a case containing the capacitor element, and butyl rubber sealing the case, wherein the distance between the Hansen solubility parameter of the solvent and the Hansen solubility parameter of the butyl rubber is not less than 26.2, and the boiling point of the solvent is not less than 160 degrees celsius.

[Effect of Invention]

The electrolyte for an electrolytic capacitor of the present invention has a characteristic that it is difficult to evaporation volatilization and disperse with respect to butyl rubber used as a sealing member. A long-life electrolytic capacitor can be obtained by suppressing the evaporation volatilization of the electrolytic solution. Further, when evaluated by the HSP distance, the predictive medium rate is high, so that the most suitable solvent for the electrolytic solution for the electrolytic capacitor can be easily selected.

MODE FOR CARRYING OUT THE INVENTION

Hereinafter, an electrolyte solution and an electrolytic capacitor according to embodiments of the present invention will be described.

The electrolytic capacitor of the present invention includes a liquid electrolytic capacitor having only an electrolytic solution, and a solid electrolytic capacitor using a solid electrolyte layer containing a conductive polymer and an electrolyte solution in combination.

The electrolytic capacitor has butyl rubber as a capacitor element, a case, and a sealing member. The case accommodates a capacitor element. The butyl rubber is attached to the opening of the case by swaging and seals the opening of the case. The capacitor element comprises an anode foil, a cathode foil, a separator, and an electrolyte. The electrolytic solution includes a solvent and a solute. The anode foil and the cathode foil face each other with a separator therebetween. A dielectric film is formed on the surface of the anode foil. A dielectric film is also formed on the cathode foil as required.

When the distance between the HSP of the solvent contained in the electrolytic solution and the HSP of the butyl rubber is 26.2 or more, since the affinity between the solvent and the butyl rubber is low, the electrolytic solution hardly penetrates the butyl rubber, and the evaporation volatilization of the electrolytic solution can be suppressed. In particular, it is preferable that the distance between the HSP of the solvent contained in the electrolytic solution and the HSP of the butyl rubber is 26.5 or more, since the effect of suppressing the evaporation volatilization of the electrolytic solution is high. Further, when the boiling point of the solvent is 160 degrees celsius. or higher, the electrolyte hardly vaporizes when the electrolytic capacitor is used in a high-temperature environment or in a reflow process, so that swelling of the butyl rubber and opening of the valve due to an increase in the internal pressure of the electrolytic capacitor can be suppressed.

Examples of such solvents include methanamide, glycerol carbonate, glycerin, and the like.

Examples of the solvent having an HSP distance of 26.2 or more to butyl rubber and a boiling point of less than 160 degrees celsius. include methyl hydroperoxide (boiling point of 78.1 degrees celsius.). When methyl hydroperoxide is used as a solvent for an electrolytic solution, it vaporizes in a high-temperature environment, causing swelling of butyl rubber and an increase in the internal pressure of an electrolytic capacitor. Therefore, even if the HSP distance to butyl rubber is 26.2 or more, a solvent having a boiling point of less than 160 degrees celsius. cannot be used as a solvent for an electrolyte solution for an electrolytic capacitor.

The electrolytic solution may contain a solute or an additive.

Examples of acid components of the solutes include carboxylic acids such as oxalic acid, succinic acid, glutaric acid, pimelic acid, suberic acid, sebacic acid, phthalic acid, isophthalic acid, terephthalic acid, maleic acid, adipic acid, benzoic acid, toluic acid, enanthic acid, malonic acid, 1, 6-decanedicarboxylic acid, 1, 7-octanedicarboxylic acid, Azelaic acid, resorcylic acid, Phloroglucinol acid, gallic acid, gentisic acid, protocatechuic acid, pyrocatechuic acid, trimellitic acid, pyromellitic acid, and pyromellitic acid ; phenols, sulfonic acid, boric acid, phosphoric acid, phosphorous acid, hypophosphorous acid, carbonic acid, silicic acid, and borodisalicylic acid.

Examples of the salt composed of an acid component and a base component of a solute include an ammonium salt, a quaternary ammonium salt, a quaternized amidinium salt, an amine salt, a sodium salt, a potassium salt and the like. Examples of the quaternary ammonium ion of the quaternary ammonium salt include tetramethylammonium, triethylmethylammonium, and tetraethylammonium. Examples of the quaternized amidinium salt include ethyldimethylimidazolinium, tetramethylimidazolinium and the like. Examples of the amine salt include salts of primary amines, secondary amines, and tertiary amines. Examples of the primary amine include methylamine, ethylamine, and propylamine ; examples of the secondary amine include dimethylamine, diethylamine, ethylmethylamine, and dibutylamine ; and examples of the tertiary amine include trimethylamine, triethylamine, tributylamine, ethyldimethylamine, and ethyldiisopropylamine.

Examples of the additives include complex compounds of boric acid and polysaccharides (mannitol, sorbitol, etc.), complex compounds of boric acid and polyhydric alcohols, boric acid esters, nitro compounds (o-nitrobenzoic acid, m-nitrobenzoic acid, p-nitrobenzoic acid, o-nitrophenol, m-nitrophenol, p-nitrophenol, p-nitrobenzyl alcohol, etc.), phosphoric acid esters, and the like. These may be used alone or in combination of two or more thereof.

Butyl rubber is used as a sealing member of an electrolytic capacitor. Compared with other elastomers, butyl rubber can suppress evaporation volatilization of electrolyte solution.

The electrolytic capacitor may be provided with a solid electrolyte layer containing a conductive polymer in the capacitor element. Such an electrolytic capacitor functions as a capacitor without adding a solute to the electrolytic solution. In other words, the electrolytic capacitor provided with the solid electrolyte layer containing the conductive polymer may contain at least a solvent in the electrolytic solution.

When a solid electrolyte layer containing a conductive polymer is formed in a capacitor element, the conductive polymer is a conjugated polymer or a doped conjugated polymer. The conjugated polymer is preferably a polymer obtained by polymerizing thiophene or a derivative thereof. Among them, poly (3, 4-ethylenedioxythiophene) (PEDOT) is most preferable. Known dopants can be used without particular limitation, and polystyrene sulfonic acid (PSS) is preferred from the viewpoint of electric conductivity.

When a capacitor element is provided with a solid electrolyte layer containing a conductive polymer, an electrolytic capacitor having a small equivalent series resistance (ESR) and a high capacitance (Cap) can be obtained as compared with a case where only an electrolytic solution is used.

When glycerol carbonate, methanamide or glycerin is contained in the solvent of the electrolytic solution used for the solid electrolytic capacitor, an effect of improving the electric conductivity of the conductive polymer attached to the capacitor element can be obtained. As a result, the initial ESR of the solid electrolytic capacitor can be further suppressed. Although the reason is unknown, it is considered that glycerol carbonate, methanamide, or glycerin changes the structure of the conductive polymer PEDOT / PSS and improves the carrier mobility.

Examples

(Example 1)

Methanamide was used as a solvent. Methanamide has an HSP distance of 30.7 with butyl rubber and a boiling point of 210 degrees celsius. This was used as an electrolytic solution.

(Example 2)

Glycerol carbonate was used as a solvent and this was used as an electrolyte. Glycerol carbonate has an HSP distance of 29.3 with butyl rubber and a boiling point of 160 degrees celsius.

(Example 3)

A mixed solvent of ethylene glycol and glycerin was used as a solvent. The mixing ratio in the solvent was 40 wt% ethylene glycol and 60 wt% glycerin. This mixed solvent was used as an electrolytic solution. The HSP distance of this solvent with butyl rubber was 26.2. The boiling point is above 160 °C because it is a mixed solvent of ethylene glycol and glycerin.

(Example 4)

A mixed solvent of ethylene glycol and glycerin was used as a solvent. The mixing ratio in the solvent was 20 wt% of ethylene glycol and 80 wt% of glycerin. This mixed solvent was used as an electrolytic solution. The HSP distance of this solvent with butyl rubber was 26.5. The boiling point is above 160 degrees celsius because it is a mixed solvent of ethylene glycol and glycerin.

(Example 5)

A mixed solvent of ethylene glycol and glycerin was used as a solvent. The mixing ratio in the solvent was 10 wt% ethylene glycol and 90 wt% glycerin. This mixed solvent was used as an electrolytic solution. The HSP distance of this solvent with butyl rubber was 26.6. The boiling point is above 160 degrees celsius because it is a mixed solvent of ethylene glycol and glycerin.

(Example 6)

Glycerin was used as a solvent and used as an electrolytic solution. Glycerin has an HSP distance of 26.7 with butyl rubber and a boiling point of 265 degrees celsius.

Comparative Example 1

Diethylene glycol was used as a solvent and used as an electrolyte solution. Diethylene glycol has an HSP distance of 20.0 with butyl rubber and a boiling point of 244 degrees celsius.

Comparative Example 2

Ethylene glycol was used as a solvent and used as an electrolytic solution. Ethylene glycol has an HSP distance of 25.5 with butyl rubber and a boiling point of 197 degrees celsius.

Comparative Example 3

A mixed solvent of ethylene glycol and glycerin was used as a solvent. The mixing ratio in the solvent was 50 wt% of ethylene glycol and 50 wt% of glycerin. This mixed solvent was used as an electrolytic solution. The HSP distance of this solvent with butyl rubber was 26.0. The boiling point is above 160 degrees celsius because it is a mixed solvent of ethylene glycol and glycerin.

(Evaluation of Evaporation volatilization Amount of Electrolytic Solution)

The prepared electrolytic solution (5g) was put into a bottomed cylindrical aluminum case, the open end of the aluminum case was sealed with butyl rubber, and the initial weight was measured. After being left in an environment at a temperature of 170 degrees celsius. for 500 hours, the weight was measured, and the weight difference between before and after the high-temperature leaving test was calculated. The results are shown in Table 1.
Table 1 shows the type of solvent, the distance between HSP of solvent and HSP of butyl rubber, and the amount of evaporation volatilization of electrolyte. The amount of evaporation volatilization of the electrolytic solution indicates the weight difference after before challenge test in Examples 1 to 6 and Comparative Examples 2 to 3 when the weight difference before and after the high-temperature exposure test in Comparative Example 1 is set as a reference (100).

[Table 1]

| | solvent | Distance between HSP of solvent and HSP of butyl rubber | Evaporation amount of electrolyte |
|---|---|---|---|
| Comparative example 1 | diethylene glycol | 20.0 | 100.0 |
| Example 1 | methanamide | 30.7 | 0.0 |
| Example 2 | glycerol carbonate | 29.3 | 0.0 |
| Comparative example 2 | ethylene glycol | 25.5 | 64.5 |
| Comparative example 3 | ethylene glycol(50wt%) glycerin (50wt%) | 26.0 | 35.0 |
| Example 3 | ethylene glycol(40wt%) glycerin (60wt%) | 26.2 | 24.7 |
| Example 4 | ethylene glycol(20wt%) glycerin (80wt%) | 26.5 | 11.4 |
| Example 5 | ethylene glycol(10wt%) glycerin (90wt%) | 26.6 | 5.7 |
| Example 6 | glycerin | 26.7 | 0.3 |

From Table 1, it can be seen that there is no correlation with the evaporation volatilization of the solvent, but there is correlation with the HSP distance from butyl rubber. When the HSP distance to the butyl rubber is 26.2 or more, the evaporation volatilization of the electrolytic solution is largely suppressed. In particular, in Examples 1, 2 and 6, the electrolyte solution did not substantially steam and disperse.

When the HSP distance to butyl rubber was more than 26.2, the vaporization and dispersion of electrolyte solution was greatly suppressed. By using such an electrolytic solution for an electrolytic capacitor, a long-life electrolytic capacitor can be produced.

## Claims

1. An electrolyte solution for an electrolytic capacitor **characterized in that** the electrolytic capacitor comprises a solvent having a boiling point of 160 degrees celsius or higher,
in which the distance between the Hansen solubility parameter of the solvent and the Hansen solubility parameter of the butyl rubber used as the sealing member is 26.2 or more.

2. The electrolytic solution for an electrolytic capacitor according to claim 1, wherein said solvent is at least one selected from glycerol carbonate, methanamide and glycerin.

3. An Electrolytic capacitor **characterized in that** the electrolytic capacitor comprises

a capacitor element having an anode foil having a dielectric film on a surface thereof, a cathode foil, and a separator interposed between the anode foil and the cathode foil ;
an electrolytic solution contained in the capacitor element and containing a solvent and a solute ;
a case housing the capacitor element ;
a butyl rubber for sealing the case,
wherein the electrolytic capacitor comprises :

a distance between the Hansen solubility parameter of the solvent and the Hansen solubility parameter of the butyl rubber is 26.2 or more, and
a boiling point of the solvent is not less than 160 degrees celsius.

4. An electrolytic capacitor **characterized in that** the electrolytic capacitor comprises

a capacitor element having an anode foil having a dielectric film on a surface thereof, a cathode foil, and a separator interposed between the anode foil and the cathode foil ;
a solid electrolyte layer including a conductive polymer formed in the capacitor element ;
a solvent contained in the capacitor element ;
a case housing the capacitor element and
a butyl rubber for sealing the case,
wherein the electrolytic capacitor comprises :

a distance between the Hansen solubility parameter of the solvent and the Hansen solubility parameter of the butyl rubber is 26.2 or more, and
a boiling point of the solvent is not less than 160 degrees celsius.

## INTERNATIONAL SEARCH REPORT

International application No.

**PCT/JP2021/035473**

### A. CLASSIFICATION OF SUBJECT MATTER

*H01G 9/035*(2006.01)i; *H01G 9/10*(2006.01)i; *H01G 9/145*(2006.01)i
FI:  H01G9/035; H01G9/145; H01G9/10 E

According to International Patent Classification (IPC) or to both national classification and IPC

### B. FIELDS SEARCHED

Minimum documentation searched (classification system followed by classification symbols)

H01G9/035; H01G9/10; H01G9/145

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/022472 A1 (PANASONIC INTELLECTUAL PROPERTY MANAGEMENT CO., LTD.) 30 January 2020 (2020-01-30) paragraphs [0016], [0085]-[0087], table 1, fig. 1 | 1-2 |
| A | entire text, all drawings | 3-4 |
| A | WO 2017/094242 A1 (PANASONIC INTELLECTUAL PROPERTY MANAGEMENT CO., LTD.) 08 June 2017 (2017-06-08) entire text, all drawings | 1-4 |
| A | WO 2020/022471 A1 (PANASONIC INTELLECTUAL PROPERTY MANAGEMENT CO., LTD.) 30 January 2020 (2020-01-30) entire text, all drawings | 1-4 |
| A | JP 2019-33257 A (SANYO CHEM. IND., LTD.) 28 February 2019 (2019-02-28) entire text, all drawings | 1-4 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 October 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/035473**

| Patent document cited in search report | | | Publication date (day/month/year) | Patent family member(s) | | | Publication date (day/month/year) |
|---|---|---|---|---|---|---|---|
| WO | 2020/022472 | A1 | 30 January 2020 | US paragraphs [0019], [0105]-[0120], table 1, fig. 1 | 2021/0142953 | A1 | |
| WO | 2017/094242 | A1 | 08 June 2017 | US entire text, all drawings CN entire text, all drawings | 2018/0277312 108292565 | A1 A | |
| WO | 2020/022471 | A1 | 30 January 2020 | EP entire text, all drawings | 3828907 | A1 | |
| JP | 2019-33257 | A | 28 February 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4073922 A
- WO 2011099261 A
- JP 2004214637 A